# EUROPEAN PATENT APPLICATION

(11) **EP 4 528 198 A1**
(43) Date of publication of application: **26.03.2025**
(21) Application number: 22942505.3
(22) Date of filing: 15.12.2022
(51) Int. Cl.: F27B 17/00

(54) **SLATE HOT BENDING FURNACE AND METHOD FOR PERFORMING HOT BENDING TREATMENT ON SLATE**

(30) Priority: 19.05.2022 CN 202210544277
(71) Applicant: Monalisa Group Co., Ltd., Foshan City, Guangdong 528211 (CN)
(72) Inventor: LIU, Yijun, Foshan, Guangdong 528211 (CN); PAN, Limin, Foshan, Guangdong 528211 (CN); LI, Huiwen, Foshan, Guangdong 528211 (CN); HU, Zhibin, Foshan, Guangdong 528211 (CN); QIN, Zengcheng, Foshan, Guangdong 528211 (CN)
(74) Representative: Leinweber & Zimmermann
(86) International application number: PCT/CN2022/139207
(87) International publication number: WO 2023/221485

(57) **Abstract**

The present invention belongs to the field of slates processing. Disclosed is a slate hot bending furnace and a method for performing a hot bending treatment on a slate. The slate hot bending furnace comprises: a furnace cover, configured in the form of a hot insulation plate, wherein the hot insulation plate is provided with a gas channel in communication with a furnace chamber; a blowing assembly, which is arranged outside a furnace body and is in communication with the gas channel of the furnace cover so as to provide an air flow into the furnace chamber; and heating devices, including a first heating device which is fixedly arranged on an inner wall of the furnace body so as to adjust the ambient temperature of the furnace chamber, and a second heating device which moves in a vertical direction and/or a horizontal direction of the furnace body so as to adjust the local heating temperature of position to be subjected to hot bending treatment of slate. According to the slate hot bending furnace, energy consumption can be reduced, the cooling time is shortened, the bending radius of the prepared hot bent slate meets a design requirement and has a goodness of fitment with a mold, and the surface flatness and color decoration of the slate are not affected.

## Description

### TECHNICAL FIELD

The present invention relates to the field of slate processing, specifically relates to a slate hot bending furnace and a method for performing a hot bending treatment on a slate.

### BACKGROUND

Slate (ceramic slate) with a flat shape has a monotonous structure and a limited usage range, which restricts the production capacity expansion of the slate. At present, slate teapoys and slate washbasins on the market are usually formed by cutting a slate and bonding with a glue, the edges and corners of the slate teapoy and slate washbasin are right angles, and the bonding area of the slate teapoy and slate washbasin tends to turn yellow or black after long-term use, thus affecting an appearance. Chinese patent CN111960653A places a cut slate on the upper surface of a mold, heats up to a softening temperature of the slate, and then the slate is form merely under its own gravity to obtain a hot processed slate that matches the shape of the mold. However, this method has many shortcomings, such as an incomplete fit between the hot bent slate and the mold, and the bending radius not meeting the design requirements. Moreover, during the processing, the hot bending furnace needs to be heated as a whole to the softening temperature of the slate, and to be naturally cooled before taking out the hot bent slate, which results in a long preparation period, high energy consumption, and a high production cost.

### SUMMARY OF THE INVENTION

In view of the aforementioned problem, the present invention provides a slate hot bending furnace and a method for performing a hot bending treatment on a slate. The present invention adopts a local reheating method and introduces a directional air flow for rapid cooling, which not only reduces energy consumption, shortens cooling time, shortens the preparation period and reduces production cost, but also prepares a hot bent slate with a bending radius that meets the design requirements and fits well within the mold, and the surface flatness and color decoration of the slate are not affected.

In a first aspect, the present invention provides a slate hot bending furnace. The slate hot bending furnace comprises:
a furnace body;
a mold, which is arranged inside a furnace chamber and for placing a slate to be subjected to hot bending treatment;
a furnace cover, which is configured in the form of a hot insulation plate, wherein the hot insulation plate is provided with a gas channel in communication with the furnace chamber;
a blowing assembly, which is arranged outside the furnace body and in communication with the gas channel of the furnace cover so as to provide an air flow into the furnace chamber;
heating devices, including a first heating device which is fixedly arranged on an inner wall of the furnace body so as to adjust the ambient temperature of the furnace chamber, and a second heating device which moves in a vertical direction and/or a horizontal direction of the furnace body so as to adjust a local heating temperature of a position to be subjected to the hot bending treatment of the slate;
a temperature control device, which is arranged on an outer wall of the furnace body to display the ambient temperature of the furnace chamber and the local temperature of position to be subjected to hot bending treatment of the slate;
a temperature sensing device, which is connected to the temperature control device and the heating devices, a heating power of the heating devices being adjusted by adjusting the temperature control device;
an observation port, which is arranged on an outer wall of the furnace body, and to observe a hot bending condition of the slate inside the furnace chamber.

Preferably, a flow direction of the air flow is consistent with a direction of the slate shaping toward a designed arc of the mold prompting the slate to further fit with the mold under a force generated by the air flow

Preferably, the hot insulation plate is equipped with one or more pores to form a gas channel and is in communication with the external blowing assembly.

Preferably, the hot insulation plate includes a first hot insulation plate and a second hot insulation plate embedded in the first hot insulation plate; the second hot insulation plate is made of a porous material, and the first hot insulation plate is equipped with one or more pores to form a gas channel; the gas channel and the porous structure of the second hot insulation plate are in communication with the blowing assembly to provide the air flow into the furnace chamber.

Preferably, the second hot insulation plate is made of a honeycomb ceramic with porous structures distributed on a surface and inside thereof.

Preferably, the hot insulation plate of the furnace cover is equipped with a scalable support for the second heating device; the movement of the second heating device is adjusted by controlling the scalable support.

Preferably, the temperature sensing device includes a first temperature sensing device arranged on an inner wall of the furnace body so as to sense the ambient temperature of the furnace chamber, and a second temperature sensing device perpendicular to and spaced between the second heating device.

Preferably, the scalable support is provided with the second temperature sensing device connected to the second heating device so as to sense the local temperature of the position to be subjected to the hot bending treatment of the slate.

In a second aspect, the present invention provides a method for performing a hot bending treatment on a slate using any of the above mentioned slate hot bending furnace. The method comprises the following steps:
Step S1: placing the slate to be subjected to the hot bending treatment on an upper surface of a mold and closing a furnace chamber;
Step S2: turning on a first heating device and preheating the furnace chamber; preferably, the preheating is to uniformly raise the ambient temperature of the furnace chamber to 800 °C to 900 °C within 25 minutes to 50 minutes;
Step S3: increasing the heating power of the first heating device, and reheating the slate until the slate softens and is promoted to pre-form under its own gravity; preferably, the reheating is to raise the ambient temperature of the furnace chamber from 800 °C to 900 °C to 1,000 °C to 1,100 °C within 30 minutes to 40 minutes;
Step S4: subjecting a second heating device to moving so as to adjust a distance between the second heating device and a position to be subjected to the hot bending of the slate, and simultaneously turning on the second heating device to locally heat the slate to accelerate the fit between the slate and the mold; preferably, the distance between the second heating device and the position to be subjected to hot bending of slate is 1 cm to 3 cm;
Step S5: turning off the first heating device and the second heating device, turning on a blowing assembly so as to introduce an air flow into the furnace chamber to rapidly cool the slate, a flow direction of the air flow being consistent with a direction of the slate shaping toward s designed arc of the mold prompting the slate to further fit with the mold under a force generated by the air flow; preferably, the rapid cooling is to cool the furnace chamber to 800 °C to 900 °C within 30 minutes to 50 minutes;
Step S6: turning off the blowing assembly, naturally cooling the furnace chamber to room temperature, and taking out a hot bent slate.

Preferably, a local heating temperature is 1,200 °C to 1,300 °C.

### BRIEF DESCRIPTION OF DRAWINGS

FIG. 1 is a flowchart of a method for hot bending a slate using a hot bending furnace of the present invention.
FIG. 2 is a stereogram of a slate hot bending furnace of the present invention (some components are not shown); 1 - gas channel, 2 - hot insulation plate, 3 - furnace body, 4 - temperature sensing device, 5 - temperature control device, 6 - observation port.
FIG. 3 is a cross-sectional view of a slate hot bending furnace of the present invention; 1 - gas channel, 2-1 - first hot insulation plate, 2-2 - second hot insulation plate, 3 - furnace body, 4-1 - first temperature sensing device, 4-2 - second temperature sensing device, 7 - first heating device, 8 - second heating device, 9 - slate, 10 - mold, 11- scalable support.
FIG. 4 is a discoloration defect picture of a dark hot bent slate prepared using an existing slate hot processing device.
FIG. 5 is a picture of error defect of arc radius for different batches of hot bent slates prepared using an existing slate hot processing device.
FIG. 6 is a schematic picture of arc radius error for different batches of hot bent slates prepared in Example 1.
FIG. 7 is a picture of a dark hot bent slate prepared in Example 1.
FIG. 8 is a picture of a hot bent slate teapoy prepared in Example 2.

### DETAILED DESCRIPTION OF EMBODIMENTS

In order to make the purpose, technical solution, and technical effect of the present invention clearer, the present invention will be further illustrated as following by the drawings and the detailed description of embodiments.

The present invention provides a slate hot bending furnace. The furnace body of the slate hot bending furnace has a function of hot insulation. Preferably, the furnace body is made of a refractory thermal insulation material. The composition of the refractory thermal insulation material is not limited, and a common refractory thermal insulation material(s) in the art can be used. The shape and size of the furnace body can be adjusted adaptively according to actual demands. In some embodiments, the furnace body has a rectangular structure.

The mold is arranged in a furnace chamber. The mold can be used to place a slate to be subjected to hot bending treatment. The mold has a characteristic of fast thermal conductivity. A high-temperature resistant graphite mold can be used. The manufacturing process and structure of the mold are routine operations in the art, which are not described in detail herein. In practice, a graphite mold is prepared based on a design drawing of a hot bent slate, wherein the shape, size, and bending effect of the mold are consistent with the design drawing of the hot bent slate. The mold can be placed on a base on the opposite side of a furnace cover. Preferably, the upper surface of the base is fixedly connected to the lower surface of the mold.

The shape and size of the furnace cover of the hot bending furnace are compatible with the furnace body. For example, when the furnace body has a rectangular structure, the furnace cover is also correspondingly configured as a rectangular structure. The furnace cover is snap-fitted to the furnace body, forming a relatively enclosed space (furnace chamber) except for a specially designed gas channel. The furnace cover is configured in the form of a hot insulation plate. The hot insulation plate can be formed as a whole or designed as two-pieces. Certainly the hot insulation plate can be designed as a multi-piece. A gas channel in communication with the furnace chamber is provided on the hot insulation plate.

A blowing assembly is arranged outside the furnace body and in communication with the gas channel of the furnace cover so as to provide an air flow into the furnace chamber. The blowing assembly can be an electric blower. The flow direction of the air flow is consistent with the direction of the slate (surface of the slate, which can be a flat surface) shaping towards the curved arc of the mold design. The force generated by the air flow prompts the slate to fit to the direction of the mold.

In some embodiments, the furnace cover includes an integrally formed hot insulation plate. One or more air holes are provided on the hot insulation plate to form a gas channel which is in communication with the external blowing assembly. During rapid cooling, an air flow provided by the blowing assembly is directly blown into the furnace chamber through this gas channel. When the direction of air flow is consistent with the direction of the slate shaping towards the arc of mold design, the force generated by the air flow causes the slate to fit to the mold. Since the mold is placed on the base on the opposite side of the furnace cover, the slate placed on the (surface of the) mold can also be face-to-face to the gas channel of the furnace cover, which can further keep the direction and intensity of the force generated by the air flow without being disturbed by external factors.

In some embodiments, the furnace cover includes a two-piece designed hot insulation plate. The hot insulation plate includes a first hot insulation plate and a second hot insulation plate embedded in the first hot insulation plate. The contour shape of the second hot insulation plate matches that of the first hot insulation plate. Certainly one or more through holes can be arranged on the first and second hot insulation plates respectively as gas channels. Preferably, the second hot insulation plate is made of a porous material, and the first hot insulation plate is provided with one or more pores to form a gas channel. So that the gas channel and the porous structure of the second hot insulation plate are in communication with the blowing assembly to provide an air flow into the furnace chamber. In this way, during rapid cooling, the air flow provided by the blowing assembly is directly blown into the furnace chamber through this gas channel, and when the direction of the air flow is consistent with the direction of the slate shaping towards the arc of mold design, the force generated by the air flow precipitates the slate to fit to the mold.

Preferably, the second hot insulation plate is made of a honeycomb ceramic with a porous structure distributed on the surface and inside thereof. The air flow conveyed by the blowing assembly flows into the interior of the second hot insulation plate through the gas channel of the first hot insulation plate and flows into the furnace chamber through the pores, and then acts on the slate.

The heating device includes a first heating device and a second heating device. The first heating device is fixedly arranged on an inner wall of the furnace body to regulate the overall ambient temperature of the furnace chamber. The first heating device can use conventional electric heating elements in the art. The first heating device includes but is not limited to electric heating wires (heating furnace wires), electric heating tubes, and electric heating plates. For example, the first heating device can be a heating furnace wire. The number of heating elements of the first heating device can be adjusted adaptively according to actual needs. In some embodiments, one or more heating furnace wires are arranged on inner walls on opposite sides of the furnace body. The ambient temperature of the furnace chamber can be regulated by adjusting the heating power of the first heating device.

The second heating device is arranged inside the furnace chamber, and can be movable along a vertical and/or horizontal direction of the furnace body. The second heating device is arranged at or near the position to be subjected to hot bending of the slate. By moving the second heating device, the distance between the second heating device and the part to be subjected to hot bending treatment of the slate can be adjusted, thereby changing the local heating temperature of the slate at that position. The second heating device can be commonly used movable heating elements in the art. For example, it can be a movable silicon carbide rod. The number of second heating devices can be adjusted adaptively according to actual situation. The local heating temperature can be changed by adjusting the heating power of the second heating device.

The hot insulation plate of the furnace cover is provided with a scalable support of the second heating device. The movement of the second heating device can be adjusted by controlling the scalable support. For example, by adjusting the length of the scalable support, the distance between the second heating device and the hot bent slate can be adjusted. In this way, the second heating device and mold are located on opposite sides, and thus the hot bending treatment process can be more conveniently controlled.

By setting a movable second heating device in the slate hot bending furnace, local heating can be applied on the part to be subjected to hot bending treatment of the slate, which can make the part to be subjected to hot bending treatment of the slate closely and quickly fit to the mold so as to meet a design standard.

The temperature control device is arranged on the outer wall of the furnace body to display the ambient temperature of the furnace chamber and the local temperature of the part to be subjected to hot bending treatment of the slate. In some embodiments, the temperature control device includes a panel displaying temperature.

The temperature sensing device is connected to the temperature control device and the heating device, and the heating power of the heating device is adjusted by controlling the temperature control device. In some embodiments, the temperature sensing device includes a first temperature sensing device arranged on the inner wall of the furnace to sense the ambient temperature of the furnace chamber, and a second temperature sensing device perpendicular to and spaced between the second heating device.

The temperature sensing device can be a temperature measuring thermocouple(s). Regarding the first temperature sensing device, one or more thermocouples can be arranged on the inner walls on opposite sides of the furnace body to detect the ambient temperature of various areas of the furnace chamber. Regarding the second temperature sensing device, the distance between the second temperature sensing device and the second heating device is preferably 3 cm to 6 cm, which can better reflect the local temperature of the part to be subjected to hot bending of the slate. Preferably, the second temperature sensing device connected to the second heating device is arranged on the scalable bracket to sense the local temperature of the part to be subjected to hot bending treatment of the slate.

An observation port(s) is arranged on the outer wall of the furnace body, and used to observe the hot bending condition of the slate inside the furnace chamber. The observation port is one or more observation holes or windows.

The existing slate hot bending furnace integrally heats the entire slate during the production process of performing a hot bending treatment on a slate, resulting in warping or discoloration of a plane section of the slate due to overheating, or resulting in discoloration and inability to accurately fit to the mold due to insufficient or uneven heating on the parts to be subjected to hot bending. The slate hot bending furnace described in the present invention overcomes the above-mentioned problems, and obtains a hot bent slate which has a high accuracy to match with the mold design and meets the design requirements, and also the surface flatness and color decoration of the slate are not affected.

The following description exemplarily illustrates a method of performing a hot bending treatment on a slate using the above-mentioned slate hot bending furnace.

A slate to be hot bent is selected. The composition of the slate is not limited, and common slates in the art can be used. The specification of the slate is also not limited, but the specification of the slate needs to be adapted to the size of the furnace chamber. In the embodiments, a slate produced by Monalisa Group Co., Ltd. is used.

A slate to be subjected to hot bending is placed on the surface of the mold and then the furnace chamber is closed. For example, a slate to be subjected to hot bending is placed on the upper surface of a mold in the furnace chamber and is covered with a furnace cover to close the furnace chamber.

Preheating. Slate (ceramic slate) is a kind of brittle material and tends to rupture under the influence of thermal stress during heating. Moreover, the slate is a poor conductor of heat, with a relatively slow heat transfer rate. In the initial heating process, the temperature (of the furnace) is low and the thermal radiation is small. The surface of the slate is first heated, and at the same time, the temperature of mold in the furnace chamber is low. Thus there is a large temperature difference in the slate on the thickness direction thereof, and the slate is unevenly heated, generating stress caused by an inconsistent thermal expansion of the slate. When the thermal stress exceeds the strength of the slate, the slate may explode. Within a certain range, the larger the heating speed and temperature difference is, the greater the thermal stress generated. Therefore, it is necessary to perform preheating to evenly heat the slate in the thickness direction thereof and avoid the slate from exploding during the process from room temperature to reheating. The first heating device can be used for preheating. The preheating process is uniformly heating the furnace chamber to 800 °C to 900 °C within 25 minutes to 50 minutes.

Reheating. The power of the first heating device is increased and the slate is reheated to soften the slate and preforms under its own gravity. The shape of preforming matches the mold design. The reheating process is raising the ambient temperature of the furnace chamber from 800°C to 900 °C to 1,000 °C to 1,100 °C within 30 minutes to 40 minutes.

Local high-temperature fitting treatment. The second heating device is movable to adjust the distance between the second heating device and the part to be subjected to hot bending of the slate. At the same time, the second heating device is activated to locally heat the part to be hot bent of the slate to promote its (insulation) fit with the mold. The movable second heating device can be controlled through a computer program. The distance between the second heating device and the part to be subjected to hot bending of the slate is preferably 1 cm to 3 cm. If the distance between the second heating device and the part to be subjected to hot bending of the slate is too close, the local temperature of the slate is too high, resulting in defects such as hot bending holes; if the distance (between the second heating device and the part to be subjected to hot bending of the slate) is too far, local heat cannot be effectively applied on the part to be subjected to hot bending of the slate, thereby affecting the bending effect. The temperature of local heating can range from 1,200 °C to 1,300 °C. The firing temperature range of the slate is between 1,250 °C to1,270 °C. The above local heating temperature can further soften the part to be subjected to hot bending of the slate so as to fully fit to the mold.

Rapid cooling. The first and second heating devices are turned off, an air into the furnace chamber is introduced for rapid cooling, and a (downward) force formed by the introduced air in the furnace chamber further profits the slate to fit to the mold. Specifically, an air flow is introduced into the furnace chamber to rapidly cool the slate, and the direction of the air flow is consistent with the direction of the slate shaping towards the arc of the mold design, allowing the slate to further fit to the mold under the force generated by the air flow. The existing technology uses high-temperature annealing or natural cooling for temperature control to slowly cool the slate. Due to the lack of wind force, the slate cannot further fit to the mold for shaping. The speed of rapid cooling can be controlled by adjusting the blowing rate of the blowing assembly by controlling its output power. If the blowing rate is too large, more air enters into the furnace, and a fast rapid cooling speed is formed; if the blowing rate is too small, less air enters into the furnace, and a slow rapid cooling speed is formed.

Preferably, the rapid cooling is cooling the furnace chamber to 800 °C to 900 °C within 30 minutes to 50 minutes. For example, the rapid cooling is to cool the furnace chamber to 850 °C within 30 minutes to 50 minutes. A directional air flow is introduced into the furnace chamber allowing for a rapid cooling of the slate, improving the cooling rate, and shortening the production period. At the same time, the softened slate is further shaped to fit to the mold under the action of wind force.

In some embodiments, the blowing assembly is turned on, and air enters from the gas channel of the first hot insulation plate and flows into the furnace chamber through the pores of the second hot insulation plate. After the gas flows into (the furnace chamber), a certain downward force is generated and acts on the softened slate. The softened slate further fit to the mold under the action of wind force. The air also achieves the goal of rapid cooling.

Natural cooling. The blowing assembly is turned off so as to allow the furnace chamber to cool naturally to room temperature, obtaining a hot bent slate that fits the mold and meets the design requirements of bending curvature.

The above-mentioned hot bent slate includes but is not limited to a convex curved slate, a concave curved slate, a wavy slate, a folded slate, etc. In addition, the hot bent slate includes but is not limited to an inward bent slate or an outward bent slate, and its bending curvature is not limited to a fixed angle.

The method of hot bending treatment of the present invention adopts a first heating device to raise the ambient temperature of the furnace chamber to 1,000 °C to 1,100 °C, so that the slate is formed into a basic shape that matches the mold design under the action of its own gravity. The method of hot bending treatment of the present invention also uses a second heating device to locally heat the part to be subjected to hot bending treatment of the hot bent slate, which can make the part to be subjected to hot bending treatment of the slate closely and quickly fit to the mold, and thus meeting the design standards.

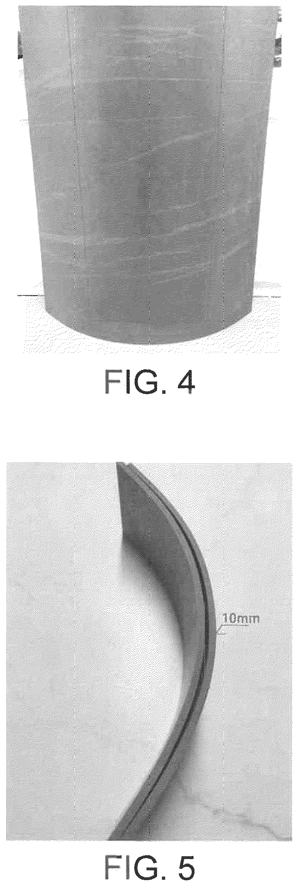

When using the hot processing device and method of Chinese patent CN111960653A to produce a dark hot bent product, as shown in FIG. 4, local discoloration occurs at the hot bent part (position) of the slate. When producing an arc hot bent product, there is a high arc curvature error. As shown in FIG. 5, the arc fitment deviation of different batches of arc hot bent products reaches 10 mm.

An example will be taken to further illustrate the present invention in detail below. It should also be understood that the following example is only used to further illustrate the present invention rather than to limit the protection scope of the present invention. All non-essential improvements and adjustments which are made by those skilled in the art according to the above contents of the present invention shall fall within the protection scope of the present invention. The specific technological parameters of the following example are merely one example in an appropriate range, that is, those skilled in the art can make choices within the appropriate range through the description herein, but the choices are not limited to the specific values of the following example.

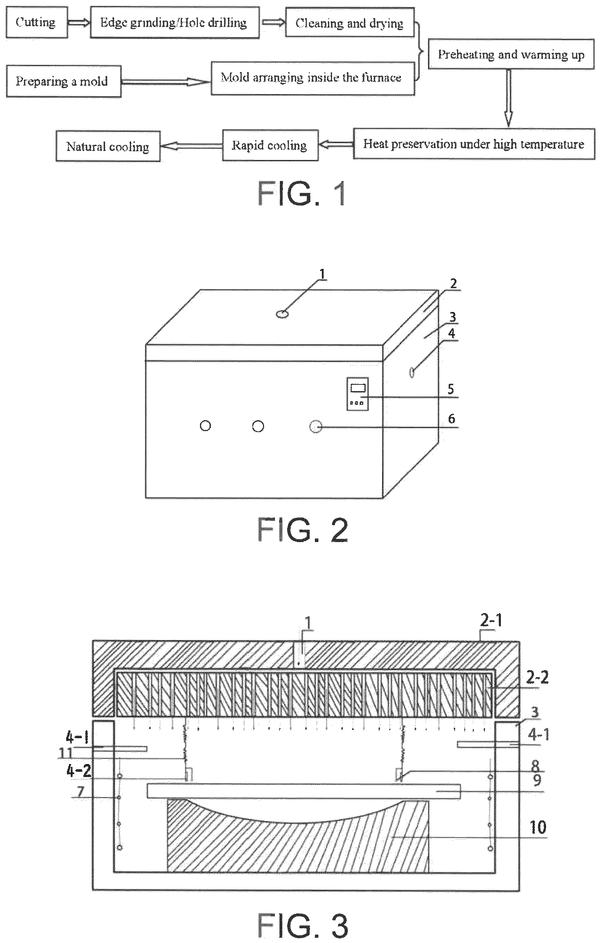

As shown in FIG. 2 and 3, a hot bending furnace includes a furnace body 3 made of a refractory insulation material, and a hot insulation plate 2 designed on the upper part of furnace body 3. The hot insulation plate 2 is a two-piece design hot insulation plate, which includes a first hot insulation plate 2-1 and a second hot insulation plate 2-2. The second hot insulation plate 2-2 is embedded in the first hot insulation plate 2-1. The second hot insulation plate 2-2 is made of a honeycomb ceramic with a porous structure distributed on the surface and inside thereof. The first hot insulation plate 2-1 is equipped with a gas channel 1. The gas channel, the porous structure of the second hot insulation plate, and an external blowing assembly are in communication to provide an air flow into the furnace chamber. A mold 10 is placed at the bottom of the furnace chamber of furnace body 3. A slate 9 to be subjected to hot bending is placed on the mold 10. A first heating device 7 and a second heating device 8 are arranged inside the furnace chamber of furnace body 3. The first heating device is a heating furnace wire, which is fixed on the inner wall of the furnace chamber. The second heating device is a movable silicon carbide rod, which is arranged in the furnace chamber. The movable silicon carbide rod can move vertically and horizontally along the furnace body, thereby adjusting the distance between the movable silicon carbide rod and the part to be subjected to hot bending of the slate. The side wall of furnace body 3 is provided with a first temperature sensing device 4-1 for temperature measurement. A scalable support 11 of the second temperature sensing device 4-2 is equipped on the hot insulation plate 2 of the furnace cover. The outer wall of the furnace body 3 is equipped with a temperature control device 5. The temperature control device 5 is connected to the first heating device 7, the second heating device 8, the scalable support 11, the first temperature sensing device 4-1, and the second temperature sensing device 4-2. The temperature control device 5 is adjusted to regulate the ambient temperature inside the hot bending furnace during the hot bending process. The movement of the second heating device is also controlled by adjusting the temperature control device 5, specifically by adjusting the extension length of the scalable support 11 to control the movement the distance between the second heating device 8 and the slate 9. The outer wall of furnace body 3 is also equipped with observation ports (three observation ports) 6 for observing the hot bending condition of the slate inside the furnace.

### Example 1

Pre-treatment of a slate. A slate with a thickness of 5.5 mm to be processed was cut and grind edges along all sides, and then was cleaned and dried. The size deviation of the cut slate was controlled within ± 0.3 mm.

Hot bending treatment. A graphite mold was placed on a base and the mold was secured. A slate to be subjected to hot bending was place on the upper surface of the mold so that it was parallel to the four sides of the mold. The furnace was covered by a furnace cover to close the hot bending furnace. A first heating device was turned on to preheat the (heating) furnace. The preheating is to uniformly heat the furnace chamber to 800 °C within 25 minutes.

Reheating. The slate was softened under high temperature and pre-shaped according to the shape of the mold under the action of its own gravity. The reheating is slowly heating the furnace chamber to 1,000 °C within 30 minutes.

Local high-temperature fitting treatment. The second heating device moved and the distance between the second heating device and the part to be subjected to hot bending of the slate was controlled to be 3.0 cm. At the same time, the power of the second heating device was turned on to locally heat the part to be subjected to hot bending of the slate to 1,200 °C. The fitting condition between the slate and the mold in the furnace chamber was observed through the observation port until the slate was fitted to the mold under its own gravity.

Rapid cooling. The first heating device and the second heating device were turned off, the blowing assembly was turned on, and air flowed into the furnace chamber from the gas channel of the first hot insulation plate and through the pores of the second hot insulation plate. After the gas flowed into the furnace chamber, it formed a certain downward force and acted on the softened slate, making the slate further fit to the mold and shape under the action of the wind, while achieving the goal of rapid cooling. The rapid cooling is cooling the furnace chamber to 850 °C within 30 minutes.

The blowing assembly was turned off, the slate was cooled naturally to room temperature, and processed to a hot inward bent slate with a bending angle of 125 degrees.

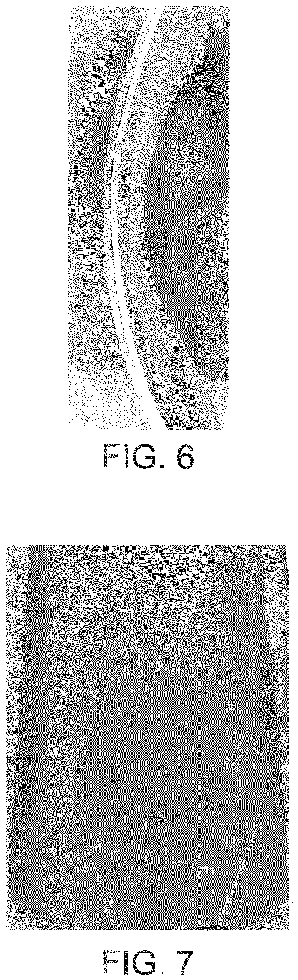

FIG. 6 is a schematic picture of arc radius error for different batches of hot bent slates prepared in Example 1. It can be found that the arc curvature error has been significantly decreased. The maximum deviation of the circular arc fitment of different batches of hot bent slates is only 3mm.

FIG. 7 is a picture of a dark hot bent slate prepared in Example 1. The dark hot bent slate did not produce local discoloration.

### Example 2

Pre-treatment of a slate. A slate with a thickness of 15.5 mm to be processed was cut and grind edges along all sides, and then was cleaned and dried. The size deviation of the cut slate was controlled within ± 0.3 mm.

Hot bending treatment. A graphite mold was placed on a base and the mold was secured. A slate to be subjected to hot bending was place on the upper surface of the mold so that it was parallel to the four sides of the mold. The furnace was covered by a furnace cover to close the hot bending furnace. A first heating device was turned on to preheat the (heating) furnace. The preheating uniformly heats the furnace chamber to 850 °C within 50 minutes.

Reheating. The slate was softened under high temperature and pre-shaped according to the shape of the mold under the action of its own gravity. The reheating is slowly heating the furnace chamber to 1,100 °C within 40 minutes.

Local high-temperature fitting treatment. The second heating device moved and the distance between the second heating device and the part to be subjected to hot bending of the slate was controlled to be 1.5 cm. At the same time, the power of the second heating device was turned on to locally heat the part to be subjected to hot bending of the slate to 1,300 °C. The fitting condition between the slate and the mold in the furnace chamber was observed through the observation port until the slate was fitted to the mold under its own gravity.

Rapid cooling. The first heating device and the second heating device were turned off, the blowing assembly was turned on, and air flowed into the furnace chamber from the gas channel of the first hot insulation plate and through the pores of the second hot insulation plate. After the gas flowed into the furnace chamber, it formed a certain downward force and acted on the softened slate, making the slate further fit to the mold and shape under the action of the wind, while achieving the goal of rapid cooling. The rapid cooling is cooling the furnace chamber to 850 °C within 50 minutes.

The blowing assembly was turned off, the slate was cooled naturally to room temperature, and processed to a hot bent slate teapoy with a bending angle of 90 degrees.

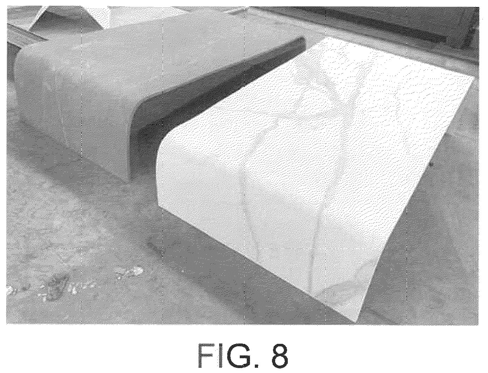

FIG. 8 is a picture of a hot bent slate teapoy prepared in Example 2. The bending curvature of the hot bent slate teapoy meets the design requirements.

### Example 3

Pre-treatment of a slate. A slate with a thickness of 10.5 mm to be processed was cut and grind edges along all sides, and then was cleaned and dried. The size deviation of the cut slate was controlled within ± 0.3 mm.

Hot bending treatment. A graphite mold was placed on a base and the mold was secured. A slate to be subjected to hot bending was place on the upper surface of the mold so that it was parallel to the four sides of the mold. The furnace was covered by a furnace cover to close the hot bending furnace. A first heating device was turned on to preheat the (heating) furnace. The preheating is to uniformly heat the furnace chamber to 900 °C within 40 minutes.

Reheating. The slate was softened under high temperature and pre-shaped according to the shape of the mold under the action of its own gravity. The reheating is slowly heating the furnace chamber to 1,050 °C within 45 minutes.

Local high-temperature fitting treatment. The second heating device moved and the distance between the second heating device and the part to be subjected to hot bending of the slate was controlled to be 1.0 cm. At the same time, the power of the second heating device was turned on to locally heat the part to be subjected to hot bending of the slate to 1,250 °C. The fitting condition between the slate and the mold in the furnace chamber was observed through the observation port until the slate was fitted to the mold under its own gravity.

Rapid cooling. The first heating device and the second heating device were turned off, the blowing assembly was turned on, and air flowed into the furnace chamber from the gas channel of the first hot insulation plate and through the pores of the second hot insulation plate. After the gas flowed into the furnace chamber, it formed a certain downward force and acted on the softened slate, making the slate further fit to the mold and shape under the action of the wind, while achieving the goal of rapid cooling. The rapid cooling is cooling the furnace chamber to 850 °C within 45 minutes.

The blowing assembly was turned off, the slate was cooled naturally to room temperature, and processed to a hot bent slate lavabo.

## Claims

1. A slate hot bending furnace, comprising:
a furnace body;
a mold, which is arranged inside a furnace chamber and for placing a slate to be subjected to hot bending treatment;
a furnace cover, which is configured in the form of a hot insulation plate, wherein the hot insulation plate is provided with a gas channel in communication with a furnace chamber;
a blowing assembly, which is arranged outside a furnace body and in communication with the gas channel of the furnace cover so as to provide an air flow into the furnace chamber;
heating devices, including a first heating device which is fixedly arranged on an inner wall of the furnace body so as to adjust the ambient temperature of the furnace chamber, and a second heating device which moves in a vertical direction and/or a horizontal direction of the furnace body so as to adjust a local heating temperature of a position to be subjected to the hot bending treatment of the slate;
a temperature control device, which is arranged on an outer wall of the furnace body to display the ambient temperature of the furnace chamber and the local temperature of position to be subjected to hot bending treatment of the slate;
a temperature sensing device, which is connected to the temperature control device and the heating devices, a heating power of the heating devices being adjusted by adjusting the temperature control device; and
an observation port, which is arranged on an outer wall of the furnace body, and to observe a hot bending condition of the slate inside the furnace chamber, wherein
when using the slate hot bending furnace to perform the hot bending treatment on the slate, the heating power of the first heating device is increased to reheat the slate until the slate softens and is promoted to pre-form under its own gravity; then the second heating device moves to adjust a distance between the second heating device and the position to be subjected to the hot bending of the slate after preforming, and simultaneously the second heating device is turned on to locally heat the slate to improve the fit between the slate and the mold; subsequently, the first heating device and the second heating device are closed, the blowing assembly is turned on, and air flow is introduced into the furnace chamber, and
a flow direction of the air flow is consistent with a direction of the slate shaping toward a designed arc of the mold, making the slate further fit to the mold under a force generated by the air flow.

2. The slate hot bending furnace of claim 1, wherein the hot insulation plate is equipped with one or more pores to form a gas channel and is in communication with the external blowing assembly.

3. The slate hot bending furnace of claim 1, wherein the hot insulation plate includes a first hot insulation plate and a second hot insulation plate embedded in the first hot insulation plate; the second hot insulation plate is made of a porous material, and the first hot insulation plate is equipped with one or more pores to form a gas channel; the gas channel and the porous structure of the second hot insulation plate are in communication with the blowing assembly to provide the air flow into the furnace chamber.

4. The slate hot bending furnace of claim 3, wherein the second hot insulation plate is made of a honeycomb ceramic with porous structures distributed on a surface and inside thereof.

5. The slate hot bending furnace of claim 1, wherein the hot insulation plate of the furnace cover is equipped with a scalable support for the second heating device, and the movement of the second heating device is adjusted by controlling the scalable support.

6. The slate hot bending furnace of claim 1, wherein the temperature sensing device includes a first temperature sensing device arranged on the inner wall of the furnace body so as to sense the ambient temperature of the furnace chamber, and a second temperature sensing device perpendicular to and spaced between the second heating device.

7. The slate hot bending furnace of claim 6, wherein the scalable support is provided with the second temperature sensing device connected to the second heating device so as to sense the local temperature of the position to be subjected to the hot bending treatment of the slate.

8. The method for performing a hot bending treatment on a slate using a slate hot bending furnace according to any of claims 1 to 7, comprising the following steps:
Step S1: placing the slate to be subjected to the hot bending treatment on an upper surface of a mold and closing a furnace chamber;
Step S2: turning on a first heating device and preheating the furnace chamber;
Step S3: increasing the heating power of the first heating device, and reheating the slate until the slate softens and is promoted to pre-form under its own gravity;
Step S4: subjecting a second heating device to moving so as to adjust a distance between the second heating device and a position to be subjected to the hot bending of the slate, and simultaneously turning on the second heating device to locally heat the slate to accelerate the fit between the slate and the mold;
Step S5: turning off the first heating device and the second heating device, turning on a blowing assembly so as to introduce an air flow into the furnace chamber to rapidly cool the slate, a flow direction of the air flow being consistent with a direction of the slate shaping toward a designed arc of the mold prompting the slate to further fit with the mold under a force generated by the air flow; and
Step S6: turning off the blowing assembly, naturally cooling the furnace chamber to room temperature, and taking out a hot bent slate.

9. The method of claim 8, wherein a local heating temperature is 1,200 °C to 1,300°C.
